# EUROPEAN PATENT APPLICATION

(11) **EP 0 845 781 A2**
(43) Date of publication of application: **03.06.1998**
(21) Application number: 97309399.0
(22) Date of filing: 21.11.1997
(51) Int. Cl.: G11B 27/031, G11B 27/34, G06F 3/033, H04N 5/268, H04H 7/00

(54) **Video-audio data processors and methods of processing and saving input video-audio data**

(30) Priority: 28.11.1996 JP 332928/96
(71) Applicant: SONY CORPORATION, Tokyo 141 (JP)
(72) Inventor: Tao, Akihiko, c/o Sony Corporation, Shinagawa-ku, Tokyo 141 (JP); Takeuchi, Shigeki, c/o Sony Corporation, Shinagawa-ku, Tokyo 141 (JP); Ueno, Shina, c/o Sony Corporation, Shinagawa-ku, Tokyo 141 (JP); Komori, Yoko, c/o Sony Corporation, Shinagawa-ku, Tokyo 141 (JP)
(74) Representative: Pilch, Adam John Michael

(57) **Abstract**

A video-audio data processor, for editing encoded video-audio data of plural programs to form a serial program and then outputting the same, comprises an encoder (21) for encoding the reproduced video-audio data (CVA) of each program and recording such data temporarily in a recording means (22,23). A play-out section (16) records the encoded data temporarily in another recording means (26) and then outputs the encoded data. A recording means selector (18) calculates the quantity of the encoded data while calculating also the remaining recording capacities of the plural recording means, and selects one recording means, where the encoded data are to be recorded, in accordance with the data quantity and the remaining recording capacities. A display unit (56A) displays the remaining recording capacities of the recording means detected by the recording means selector (18). When the encoded program is recorded, the remaining recording capacities of the plural recording means are displayed together with the quantity of the encoded data, so that an easy decision can be made as to which one of recording means is to be selected for recording the program on the basis of the remaining recording capacities and the data quantity.

## Description

The present invention relates to video-audio data processors and methods of processing and saving input video-audio data, and in particular to systems and methods for specifying a data saving means in a video-audio data processor.

There has been proposed a CM (commercial message) insertion apparatus used for inserting a CM video clip (hereinafter referred to simply as a clip) between a plurality of TV programs to be broadcast. In such a CM insertion apparatus, a clip video source is first encoded through video-audio data compression in conformity with the MPEG (Moving Picture Experts Group) standard, and after temporary storage thereof in a hard disk, a plurality of TV programs and clips are so programmed as to be broadcast successively by editing the broadcasting order, time and so forth of the TV programs and clips. In practical broadcasting, the TV programs and clips are transmitted while being changed by a switcher according to such edited program.

The CM insertion apparatus mentioned above has a library unit which consists of a plurality of hard disks serving as clip storage means for storing the clips read from a VTR and encoded. Each of the hard disks in the library unit is capable of storing clips of twenty minutes duration approximately.

In this case, it is necessary to store the clips collectively as a single series in one hard disk, and it is not allowed to store the same separately in a plurality of hard disks in the library unit. Although there may be contrived an idea of providing an additional hard disk to supplement the short storage capacity of the library unit, there still exists a problem in that, in a state where the remaining storage capacity of the hard disk is unknown from the outside, the clips need to be stored again in some other storage device in case the remaining storage capacity of the hard disk is not sufficient to store the whole set of serial clips.

According to one aspect of the present invention, there is provided a video-audio data processor for processing video-audio data and saving the same. The processor comprises a means for reproducing the video-audio data; a means for processing the video-audio data reproduced by the reproducing means; a register means for registering the video-audio data to be processed by the processing means; a plurality of selectable recording means; a means for selecting desired one of the plurality of selectable recording means to save the processed video-audio data therein; a display means for displaying the remaining recording capacity of the selected recording means; and a control means for controlling the operation in such a manner that the video-audio data registered in the register means to be processed are reproduced by the reproducing means, then the reproduced video-audio data are processed by the processing means, and the processed video-audio data are saved in the recording means selected by the selecting means.

The data processor may further comprise a computer to which a monitor is connected, wherein each of the register means, the selecting means and the display means consists of a graphical user interface operated on the computer.

In the data processor, the operation of the reproducing means may be so controlled that the register means sets a start point and an end point of the video-audio data to be processed. The register means may display, in the form of a list, a plurality of the video-audio data registered to be processed, and the list has an identification name so as to be specified.

Also in the data processor, the register means may be capable of selecting one or more lists by selecting the names of the plural lists, and tape streamers or hard disks may be provided as the plurality of selectable recording means.

Further in the data processor, the processing means may consist of a video-audio data encoder, and the register means further has a means to control the operation of reproducing the encoded video-audio data. At least one of the selectable recording means may be connected to a video-audio data server, and the server transmits the encoded video-audio data in accordance with a transmitting program list.

According to another aspect of the present invention, there is provided a method of processing and saving input video-audio data. This method comprises the steps of: registering the video-audio data to be processed; selecting, out of a plurality of selectable recording means, one recording means for saving the processed video-audio data therein; displaying the remaining recording capacity of the selected recording means; reproducing the registered video-audio data to be processed; processing the reproduced video-audio data; and saving the processed video-audio data in the selected recording means.

A preferred embodiment of the invention provides a system and a method for specifying a data saving means in a video-audio data processor capable of easily selecting, out of a plurality of recording devices, a desired one for temporarily recording encoded video data when editing such data.

The invention will now be described by way of example with reference to the accompanying drawings, throughout which like parts are referred to by like references, and in which:
Fig. 1 is a schematic block diagram showing the overall configuration of a television broadcasting system in which an embodiment of the present invention is employed;
Fig. 2 is a block diagram showing the structure of a CM insertion apparatus;
Fig. 3 is a block diagram showing the structure of an encoder in an encode processing section;
Fig. 4 is a block diagram showing the structure of a computer in the encode processing section;
Fig. 5 is a block diagram showing the structure of a video server in a play-out section;
Fig. 6 is a block diagram showing the structure of a computer in the play-out section;
Fig. 7 is a block diagram showing the structure of a computer in a monitoring section;
Fig. 8 is a block diagram showing the structure of a play list generating computer;
Fig. 9 is a schematic diagram showing the composition of displayed images in encoding control software;
Fig. 10 is a schematic diagram showing a main menu image in the encoding control software displayed on a CRT monitor;
Fig. 11 is a schematic diagram showing a clip encoding work image in the encoding control software displayed on the CRT monitor;

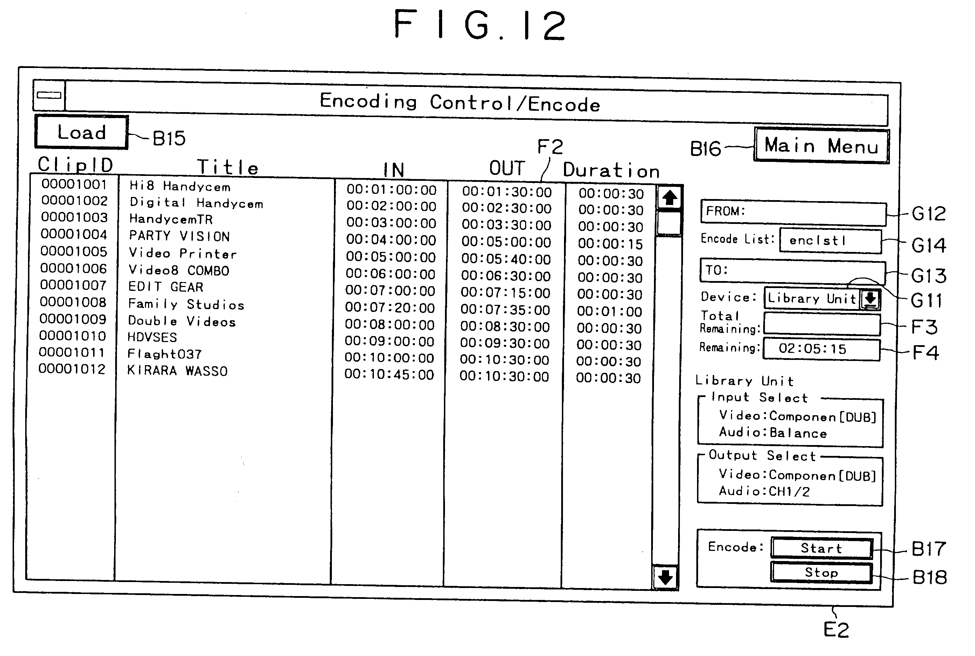

Fig. 12 is a schematic diagram showing an encode work image;

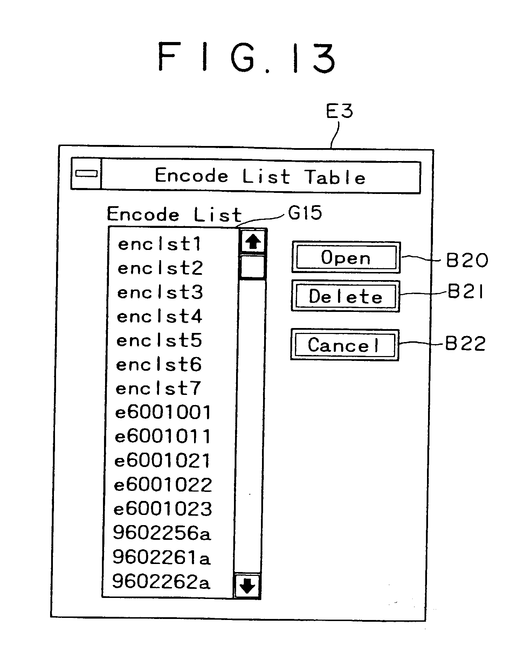

Fig. 13 is a schematic diagram showing an image of an encode list table;

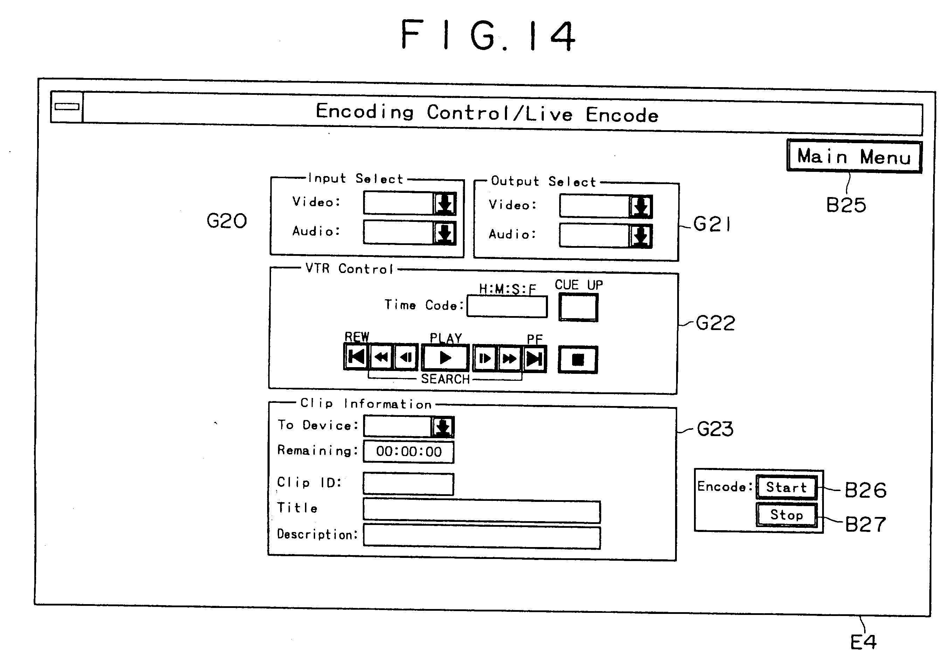

Fig. 14 is a schematic diagram showing a live encode work image in encoding/monitoring software displayed on the CRT monitor;

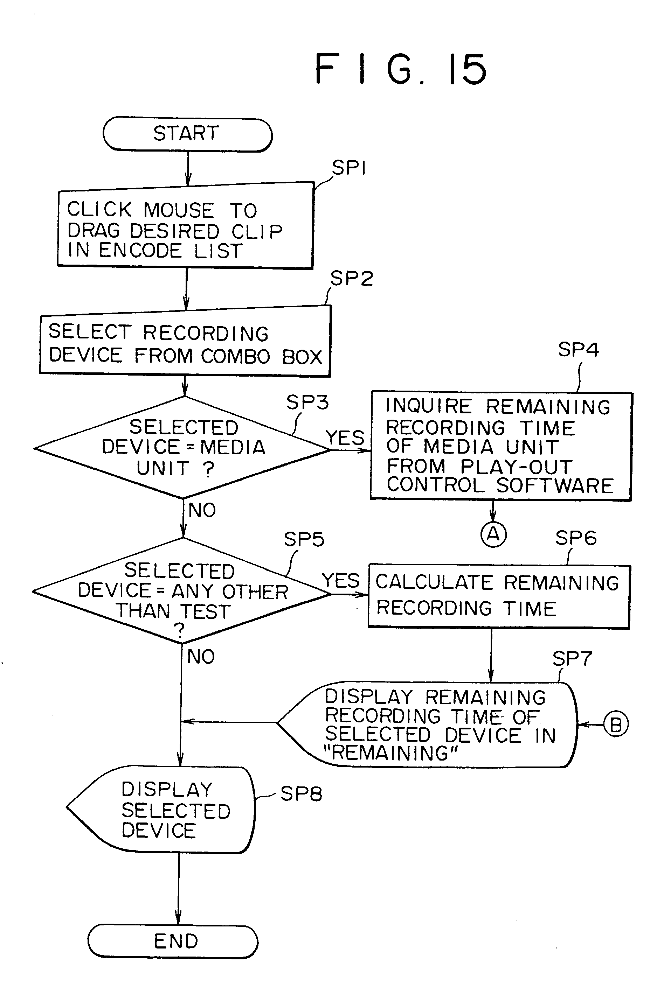

Fig. 15 is a flowchart showing selection of a recording device and display of its remaining recording time; and

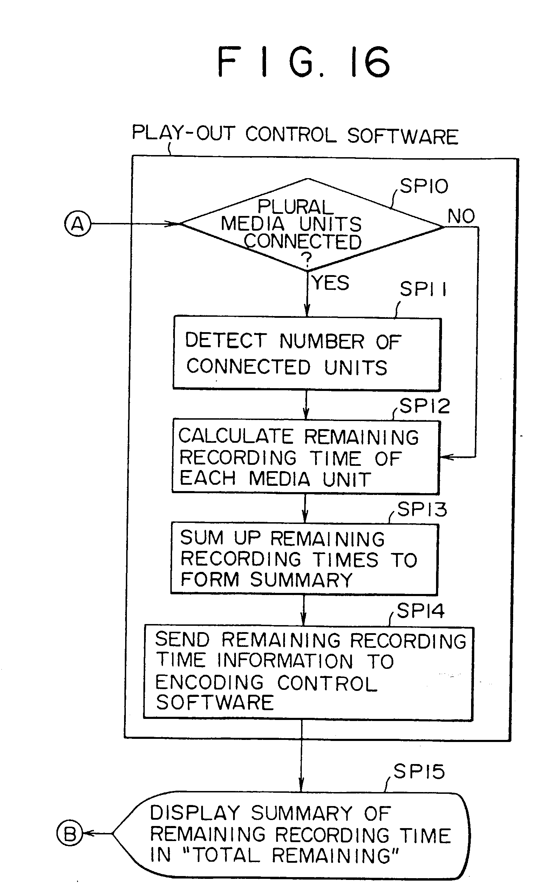

Fig. 16 is another flowchart showing selection of a recording device and display of its remaining recording time.

### (1) Overall configuration of television broadcasting system with embodiment

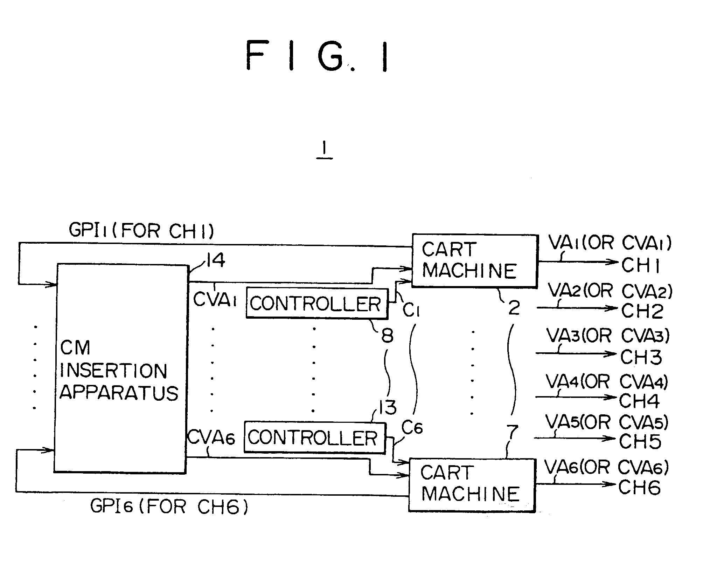

In Fig. 1, reference numeral 1 denotes a whole CATV broadcasting system to which the present invention is applied. This system consists of cart machines 2 - 7 for a plurality of channels (six channels in this embodiment), controllers 8 -13 provided correspondingly to the cart machines 2 - 7, and a CM (commercial message) insertion apparatus 14.

The controllers 8 - 13 supply control signals C1 - C6 respectively to the cart machines 2 - 7 in accordance with a TV program arranging program inputted thereto previously.

In the cart machines 2 - 7, video-audio data VA₁ - VA₆ of a specified program are reproduced from a specified video tape during the TV program broadcast time on the basis of the control signals C1 - C6 supplied respectively from the controllers 8 - 13, and the reproduced signals are outputted via an internal switcher (not shown) from the related channels.

One or two seconds before a scheduled CM insertion start time, the relevant cart machine 2 - 7 supplies a timing signal GPI₁ - GPI₆ to the CM insertion apparatus 14, which is thereby enabled to reproduce, at the start time, CM video-audio data CVA₁ - CVA₆ in accordance with a CM transmitting program list (hereinafter referred to as a play list) preset per channel, so that the relevant CM video-audio data CVA₁ - CVA₆ is transmitted to the outside via the switcher.

The cart machine 2 - 7 manages also the start time of the video-audio data VA₁ - VA₆ of the next TV program at the transmission end time of the CM video-audio data CVA₁ - CVA₆, and changes the switcher at the end of the CM video-audio data CVA₁ - CVA₆ to thereby output the video-audio data VA₁ - VA₆ of the next TV program.

In this manner, the television broadcasting system 1 transmits the TV-program video-audio data VA₁ - VA₆ and the CM video-audio data CVA₁ - CVA₆ while switching the same sequentially along the TV-program arranging program preset per channel by the cart machines 2 - 7, hence broadcasting the CM along the play list between the programs.

### (2) Structure of CM insertion apparatus

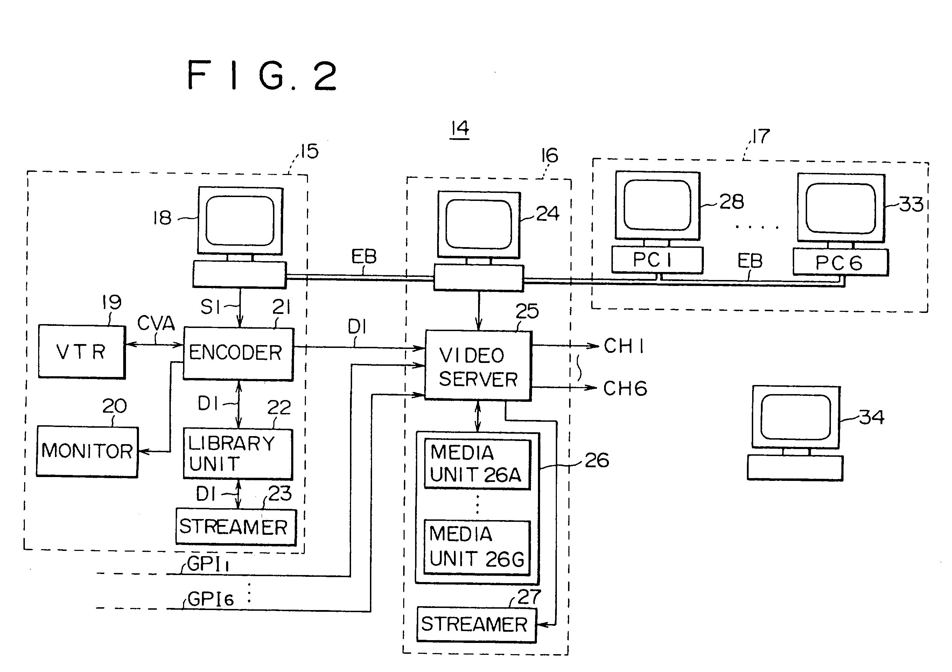

As shown in Fig. 2, the CM insertion apparatus 14 comprises an encode processing section 15 for encoding and multiplexing the CM video-audio data CVA₁ - CVA₆ according to the MPEG (Moving Picture Experts Group) standard and then outputting the same as encoded data D1, a play-out section 16 for recording and saving the encoded data D1, then reproducing the encoded data D1 in accordance with the play list preset per channel and outputting the reproduced data; and a monitoring section 17 for monitoring the transmission state of the CM video-audio data CVA₁ - CVA₆ and, when necessary, generating, reproducing and editing the play list.

The encode processing section 15, the play-out section 16 and the monitoring section 17 are connected to a network via an Ethernet bus EB.

In the encode processing section 15, the CM video-audio data CVA recorded on a video tape by a VTR 19 is encoded by an encoder 21 under control of a computer 18 while being decoded. The decoded CM video-audio data CVA is actually monitored by a monitor 20, and simultaneously the broadcast time span of the desired CM video-audio data CVA to be encoded is specified in unit of "second". And the encoded CM video-audio data is recorded in a recording means such as a library unit 22 and a streamer 23.

The computer 18 supplies to the encoder 21 an instruction signal S1 for encoding the CM video-audio data CVA of the specified broadcast time span.

In response to the instruction signal S1, the encoder 21 encodes the CM video-audio data CVA of the specified broadcast time span according to the MPEG standard.

Practically, the encoder 21 converts each CM video-audio data CVA of the specified time span while attaching thereto an ID number termed "clip ID" , hence forming an "encode list" which is composed of a plurality of clip ID.

Then the encoder 21 encodes the respective clip ID collectively on the basis of the encode list and subsequently saves the same as encode data D1 in a library unit (hard disk) 22, and simultaneously transmits the same to a video server 25 of a play-out controller 16 at a transfer rate of 10 Mbps.

In this case, the video condition (picture quality, etc.) of the encoded clip ID is displayed on the monitor 20 in the encode processing section 15. Therefore, the operator can confirm the video condition of the encoded clip ID by displaying the same on the monitor 20.

The computer 18 reads the encoded data D1 saved in the library unit 22 and then sends the data to the streamer 23 for recording the same. Thus, the CM insertion apparatus 14 is so contrived that the streamer tape, where the encoded data D1 are recorded in the encode processing section 15, can be transported and the encoded data D1 can be read in a streamer 27 of the play-out section 16 disposed in a separate place.

In response to the control signal supplied from the computer 18 of the encode processing section 15 via the Ethernet, the computer 24 of the play-out section 16 saves the encoded data D1, which have been sent from the encoder 21 of the encode processing section 15, in the specified media unit 26 (one of the media units 26A - 26G) via the video server 25.

The streamer 27 is capable of reading the encoded data D1 also by reproducing the streamer tape recorded in the streamer 23 of the encode processing section 15.

The play-out section 16 is capable of forming a "play list", which is a CM transmitting program list, on the basis of the additional information (ID No., title, etc.) attached to the clip ID of the encoded data D1 saved in each of the media units 26A - 26G, then recording the play list on a hard disk (not shown) in the computer 24 and reproducing the recorded list therefrom, and further editing the play list when necessary.

In response to timing signals GPI₁ - GPI₆ of corresponding channels supplied from the cart machines 2 - 7 respectively, the video server 25 decodes the clip ID sequentially in the order programmed in the play list, and outputs from the specified channels the CM video-audio data CVA₁ - CVA₆ in the programmed order via the cart machines 2 - 7 (Fig. 1) synchronously with the ends of the TV programs.

The monitoring section 17 has monitoring computers 28 - 33, wherein the contents of the play list (CM transmitting program list) of the CM video-audio data transmitted from the video server 25 correspondingly to the individual channels can be confirmed on the screens of the computers.

Therefore, exclusive operators stationed for the respective computers 28 - 33 in the monitoring section 17 can monitor the broadcast conditions of the CM video-audio data CVA₁ - CVA₆ with regard to the individual channels.

In the initial booted states of the monitoring computers 28 - 33, the play lists of channels 1 - 6 are allocated thereto. And each of the computers 28 - 33 is rendered capable of displaying the contents of the play list of any desired channel through changing the switch.

The monitoring computers 28 - 33 are functionally equal to the computer 24 of the play-out section 16 and are further capable of editing the play lists and executing replacement of the clip ID of the play list being reproduced.

The CM insertion apparatus 14 is externally equipped with a play list generating computer 34 to perform off-line generation and editing of play lists.

This play list generating computer 34 has a function to execute operations of generating and editing play lists, and records the generated play lists on a floppy disk (not shown).

Consequently, as the computer 24 of the play-out section 16 reads the play lists thus recorded on the floppy disk, the CM video-audio data CVA₁ - CVA₆ can be outputted from the video server 25 in accordance with the play lists.

The play lists may be received via a network of public line, electronic mail or the like instead of using a floppy disk.

### (2-1) Structure of encode processing section

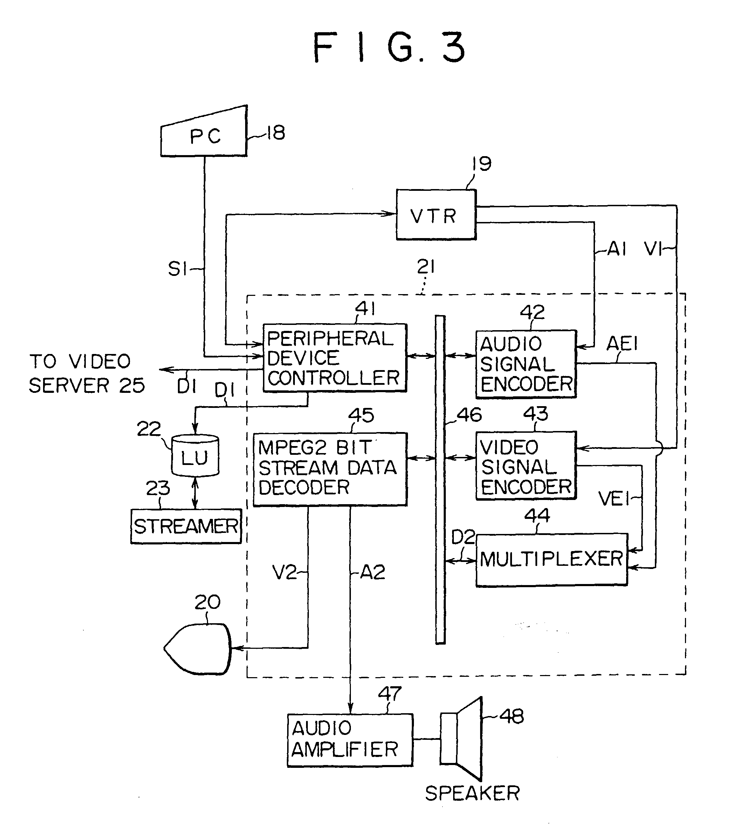

As shown in Fig. 3, the encoder 21 of the encode processing section 15 comprises a peripheral device controller 41, an audio data encoder 42, a video data encoder 43, a multiplexer 44, an MPEG2 bit stream data decoder 45, and a system bus 46 for mutually connecting the component blocks.

In response to an instruction signal S1 obtained from the computer 18, the peripheral device controller 41 reproduces, in the VTR 19, the CM video-audio data of the broadcast time span specified by a time code, and then supplies the audio data Al to the audio data encoder 42 while supplying the video data V1 to the video data encoder 43.

The peripheral device controller 41 further serves to control the audio data encoder 42, the video data encoder 43, the multiplexer 44 and the MPEG2 bit stream data decoder 45, wherein the audio data Al is encoded by the audio data encoder 42 to form audio encoded data AE1 based on the MPEG1 standard, Layer 2, while the video data V1 is encoded by the video data encoder 43 to form video encoded data VE1 based on the MPEG2 standard, MP@ML, and both of such encoded data are supplied to the multiplexer 44.

The multiplexer 44 generates bit stream data D2 by multiplexing the audio encoded data AE1 and the video encoded data VE1. The peripheral device controller 41 sends the bit stream data D2 via the system bus 46 to the MPEG2 bit steam data decoder 45.

The peripheral device controller 41 is also capable of sending the bit stream data D2 to the video server 25 and saving the same in the media units 26A - 26G via the video server 25.

Further the peripheral device controller 41 is capable of once storing the bit stream data D2 in the library unit 22 and then driving the streamer 23 to record, on a streamer tape, the bit stream data D2 stored in the library unit 22.

Under control of the peripheral device controller 41, the MPEG2 bit stream data decoder 45 decodes the bit stream data D2 to extract the CM video data V2 and the CM audio data A2, and outputs the CM video data V2 to a video confirming monitor 20 while amplifying the CM audio data A2 via an audio amplifier 47 and then outputting the amplified data as sound from a speaker 48.

Thus, the operator can actually confirm the CM video data V2 of the encoded clip ID on the monitor 20 and also the sound outputted via the speaker 48, thereby checking both the picture quality and the tone quality of the encoded clip ID.

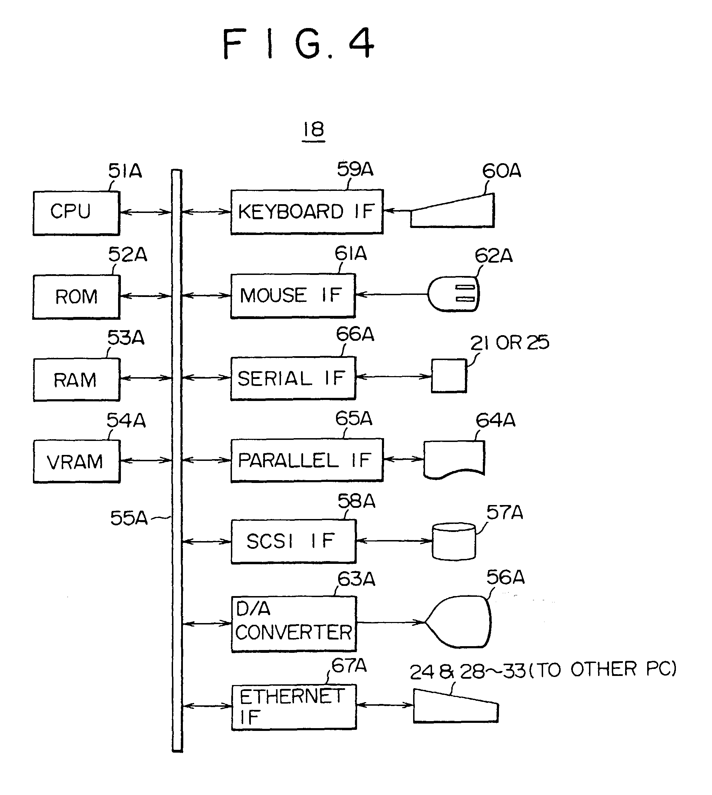

Next, as shown in Fig. 4, the computer 18 in the encode processing section 15 comprises a CPU (Central Processing Unit) 51A serving as a controller for the computer, a ROM (Read Only Memory) 52A as a main memory, a RAM (Random Access Memory) 53A, and a VRAM (Video Random Access Memory) 54A as a video display memory, all of which are mutually connected through a system bus 55A.

Further, peripheral devices such as input/output means and external storage means are connected to the CPU 51A and the main memory via the system bus 55A.

In the ROM 52A, there is stored a BIOS (Basic Input/Output System) which is a basic operation program for initializing the hardware system when booting up the computer 18. The RAM 53A is used as a work area of the CPU 51A for an execution program relative to an OS (Operating System) or application software. And the VRAM 54 is used as a memory for writing image display data to be displayed on the screen of a monitor 56A provided in the computer 18.

When the computer 18 is switched on and booted up by the BIOS read from the ROM 52A, the CPU 51A reads the OS from a hard disk 57A via an SCSI interface 58A and then loads the OS in the RAM 53A. Consequently, the computer 18 is operated under control of the CPU 51A via the OS.

In encoding the CM video-audio data, the CPU 51A reads encoding control software, which is stored to execute various processes with regard to the encoding, from the hard disk 57A via the SCSI interface 58A and, after loading such encoding control software in the RAM 53A, writes the image display data thereof in the VRAM 54A via the OS.

The computer 18 writes, in the VRAM 54A via the OS, image display data of a menu used when executing various processes relative to the encoding by means of the encoding control software, and also image display data of a text or the like inputted by manipulation of a keyboard 60A, and then displays the image on the screen by operating the CPU 51A to periodically read such image display data.

In the computer 18, the operation in this case is so performed that the input data from an input means such as a keyboard 60A or a mouse 62A are entered via a keyboard interface 59A or a mouse interface 61A and then are delivered via the OS to the encoding control software.

When the menu or work image relative to the encoding process is to be displayed on the screen of the CRT monitor 56A, the image display data are read out from the VRAM 54A under control of the CPU 51A and then are supplied to a D/A (Digital/Analog) converter 63A where the digital video signal is converted into an analog video signal, and the analog video signal thus obtained is outputted to the CRT monitor 56A.

A printer 64A is connected to the computer 18 via a parallel interface 65A and the bus 55A, so that the content of the image displayed on the screen of the CRT monitor 56A can be printed out by the printer 64A.

Further, the computer 24 of the play-out section 16 and the computers 28 - 33 of the monitoring section 17 are connected to the computer 18 of the encode processing section 15 via an Ethernet bus EB and an Ethernet interface 67A, whereby commands and data can be transferred among the computer 18 of the encode processing section 15, the computer 24 of the play-out section 16 and the computers 28 - 33 of the monitoring section 17.

The video server 25 of the play-out section 16 is connected via the Ethernet to the encoder 21 of the encode processing section 15, so that various commands for executing processes by the encoding control software can be transferred between the encoder 21 and the video server 25.

### (2-2) Structure of play-out section

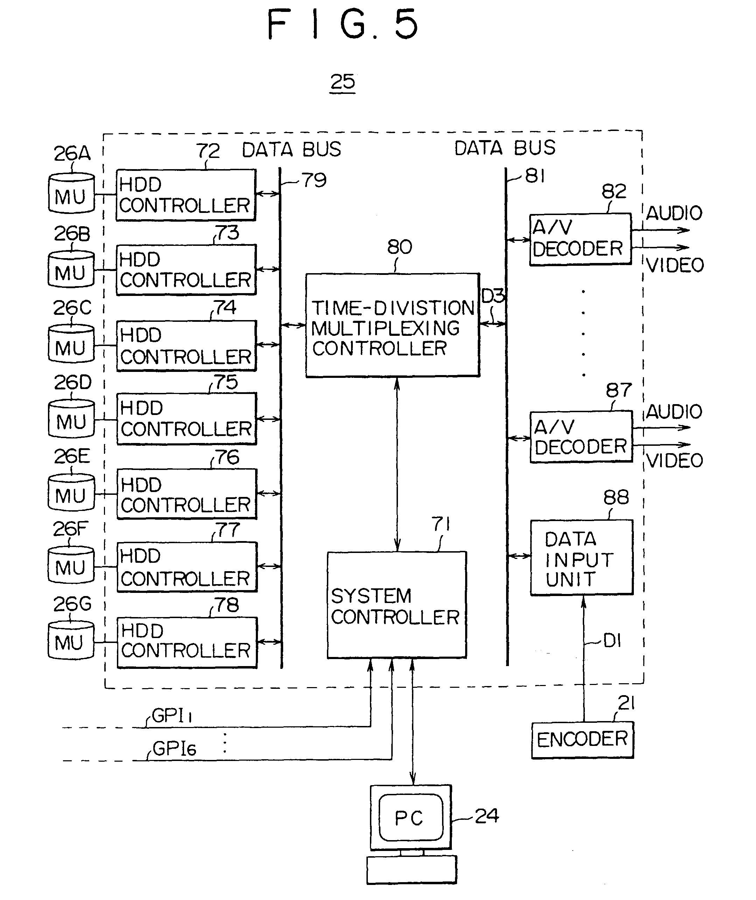

In the video server 25 of the play-out section 16, as shown in Fig. 5, a system controller 71 receives commands from the computer 24 and executes generation, editing and reproduction of a play list in response to such commands.

The system controller 71 controls the entire video server 25 and, in response to timing signals GPI₁ - GPI₆ sent from the cart machines 2 - 7, enables HDD controllers 72 - 78 to read the encoded data stored in the media units 26A - 26G respectively, and then supplies such encoded data via a data bus 79 to a time-division multiplexing controller 80.

The time-division multiplexing controller 80 generates bit stream data D3 by time-division multiplexing the encoded data and supplies the bit stream data D3 via a data bus 81 to A/V decoders 82 - 87 of corresponding channels.

Subsequently the A/V decoders 82 - 87-decode the bit stream data D3 to thereby obtain analog CM video and audio data CVA₁ - CVA₆ and then output the same.

A data input unit 88 is provided for inputting the encoded data Dl supplied thereto from the encoder 21 of the encode processing section 15, and sends the encoded data D1 to the A/V decoders 82 - 87, which then decode the encoded data D1 to thereby output analog CM video and audio data CVA₁ - CVA₆.

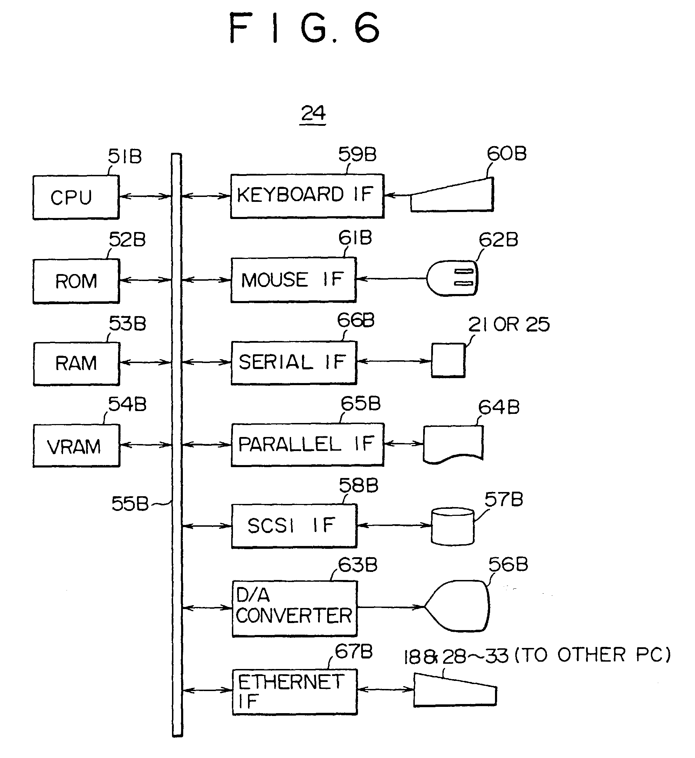

In Fig. 6 where any components corresponding to those in Fig. 4 are denoted by like reference numerals with a subscript B attached thereto additionally, the computer 24 of the play-out section 16 is structurally the same as the aforementioned computer 18 with the exception that play-out control software, which is different from the encoding control software recorded on the hard disk 57A in the computer 18, is stored on a hard disk 57B, and that the computer 24 is connected via an Ethernet interface 67B to the computer 18 of the encode processing section 15 and also to the computers 28 - 33 of the monitoring section 17.

The play-out control software is used to execute generation, editing and reproduction of a play list, so that various processes can be executed in the computer 24 according to the play-out control software.

### (2-3) Structure of monitoring section

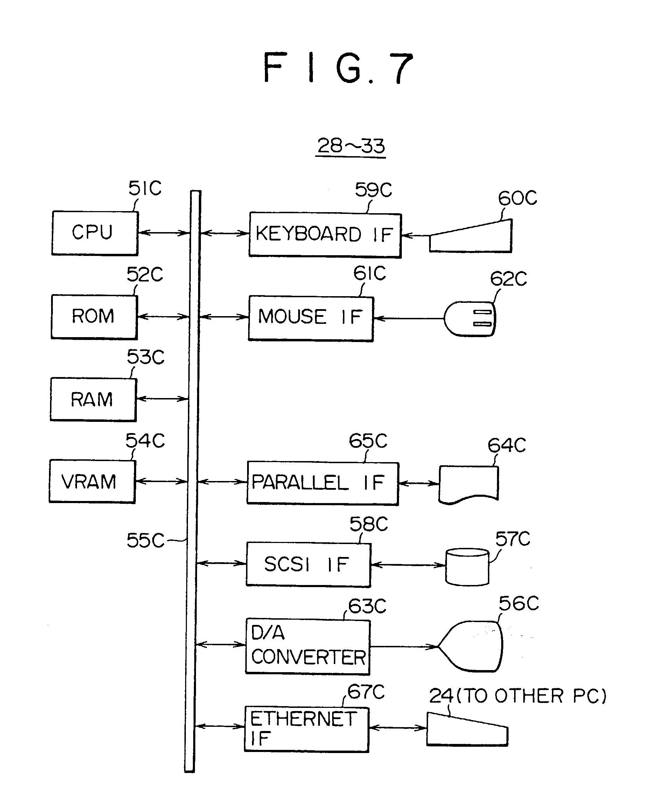

In Fig. 7 where any components corresponding to those in Fig. 4 are denoted by like reference numerals with a subscript C attached thereto additionally, each of the monitoring computers 28 - 33 in the monitoring section 17 is structurally the same as the aforementioned computer 18 with the exception that play-out monitoring software, which is different from the encoding control software recorded on the hard disk 57A in the computer 18, is stored on a hard disk 57C, and further that each of the monitoring computers 28 - 33 is connected via an Ethernet interface 67C to the computer 24 of the play-out section 16 but has not a serial interface 66B while being connected merely to the computer 24 alone.

The play-out monitoring software is a program which is completely equal in function to the play-out control software and is used not only for monitoring the contents and the transmission state of the play list on the CRT monitor 56C but also for editing the play list with change of the clip ID or replacement thereof and further for executing reproduction of the play list.

Thus, each of the computers 28 - 33 is functionally similar to the computer 18, but it is normally so set that the function of the computer 18 is given priority.

Therefore, only when priority is given to the function of the computers 28 - 33 from the computer 18 by a manipulation of the operator, the computers 28 - 33 are rendered capable of executing generation, reproduction and editing of the play list.

### (2-4) Structure of play list generating computer

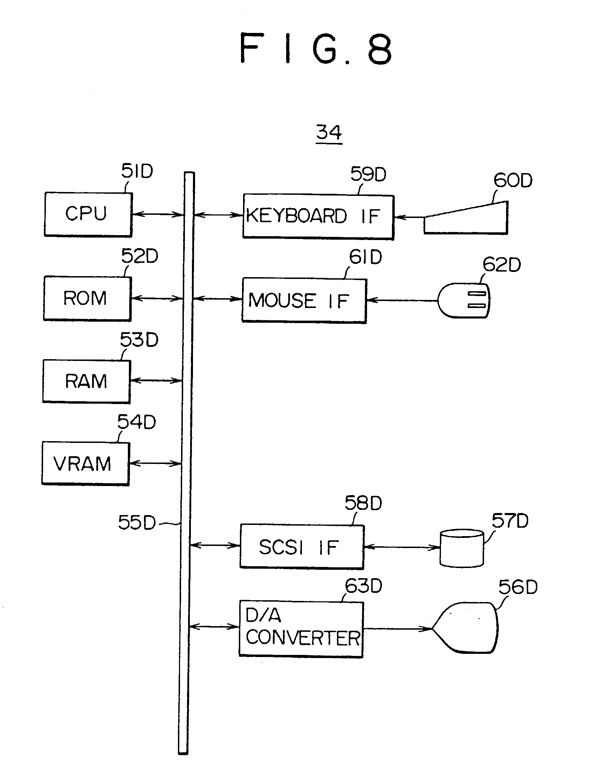

In Fig. 8 where any components corresponding to those in Fig. 4 are denoted by like reference numerals with a subscript D attached thereto additionally, the play list generating computer 34 is structurally the same as the computer 18 with the exception that play list creation software, which is different from the encoding control software recorded on the hard disk 57A in the computer 18, is stored on a hard disk 57D, and further that the computer 34 has none of a serial interface, a parallel interface and an Ethernet interface, and is not connected to any other computer.

The play list creation software is a program having functions of generating and editing a play list, whereby the play list generated in the play list generating computer 34 can be recorded on a floppy disk or the like, and the recorded play list data can be read out by the computers 24 and 28 - 33.

### (3) Structure of encode processing section

### (3-1) Encode processing section

In the encode processing section 15, a clip read out from the VTR 19 under encoding control is once recorded in the library unit 22 via the encoder 21. In this case, the computer 18 of the encode processing section 15 detects the remaining storage capacities, i.e., remaining recording times, of the hard disk constituting the library unit 22, the streamer 23 and the media unit 26 included in the play-out section 16, and then displays the detected times on the screen of the monitor 56A.

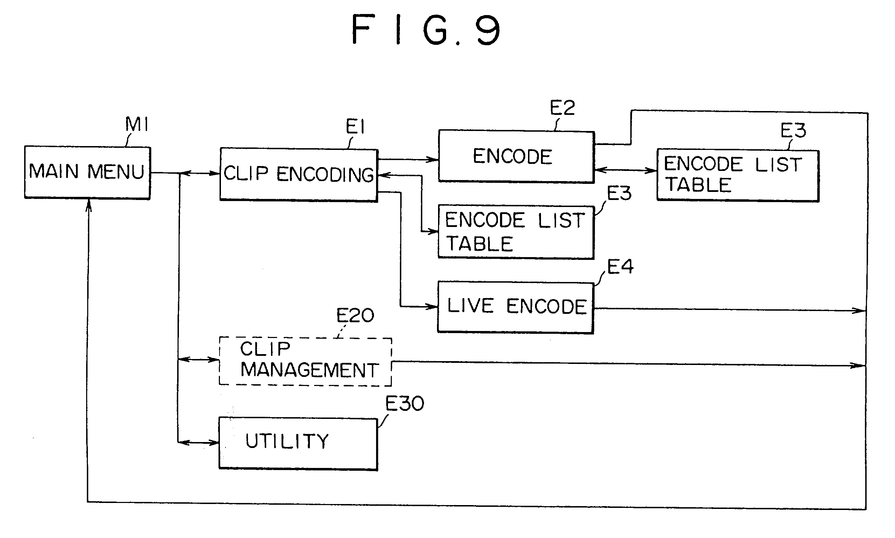

In the encode processing section 15, a menu image M1 and a plurality of work images El - E4, E20 and E30 shown in Fig. 9 are displayed on the screen of the monitor 56A of the computer 18 under control of the CPU according to the encoding control software (hereinafter referred to as encoding control program), and the operator encodes the video data while confirming, through a GUI (graphical user interface), the remaining recording times of the library unit 22, the streamer 23 and the media unit 26 detected by the computer 18.

### (3-2) Compositions of encoding control images

The encoding control images include a menu image M1 at the top level, and a clip encoding work image El, a clip management work image E20 relative to clip management, and a utility work image E30 relative to various utility functions at the next lower level. And at a further lower level below such clip encoding work image El, there are subordinate an encode work image E2, an encode list table work image E3 and a live encode work image E4 at the same level. The encode list table work image E3 can be accessed directly from the encode work image E2 at the same level.

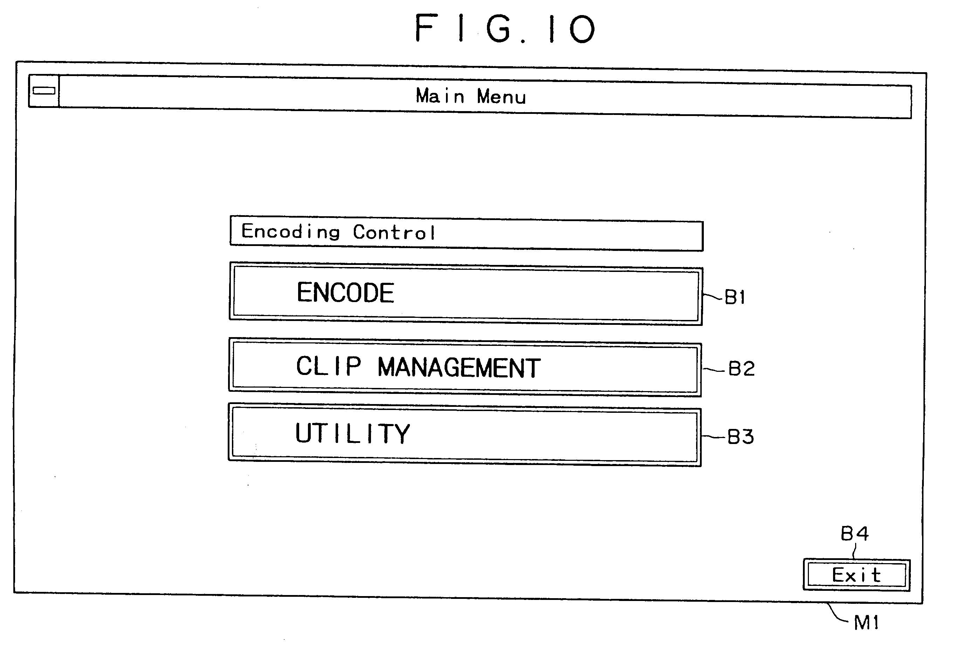

As shown in Fig. 10, the menu image M1 displayed on the screen of the monitor 56A includes an encode select button B1 for selecting the work image El relative to encoding of each clip, a clip management select button B2 for selecting the work image E20 relative to clip management for editing the encoded clip (by manipulating the reproduced image displayed on the monitor 56A through selection of "Preview", "Browse" or "Stop" with regard to the clip in the encode list, or erasing the clip in the encode list, or rewriting the title of the clip), and a select button B3 for selecting the work image E30 where selection items relative to various utility functions are contained. And there is further provided an end select button B4 ("Exit") used at the time of ending the encoding control.

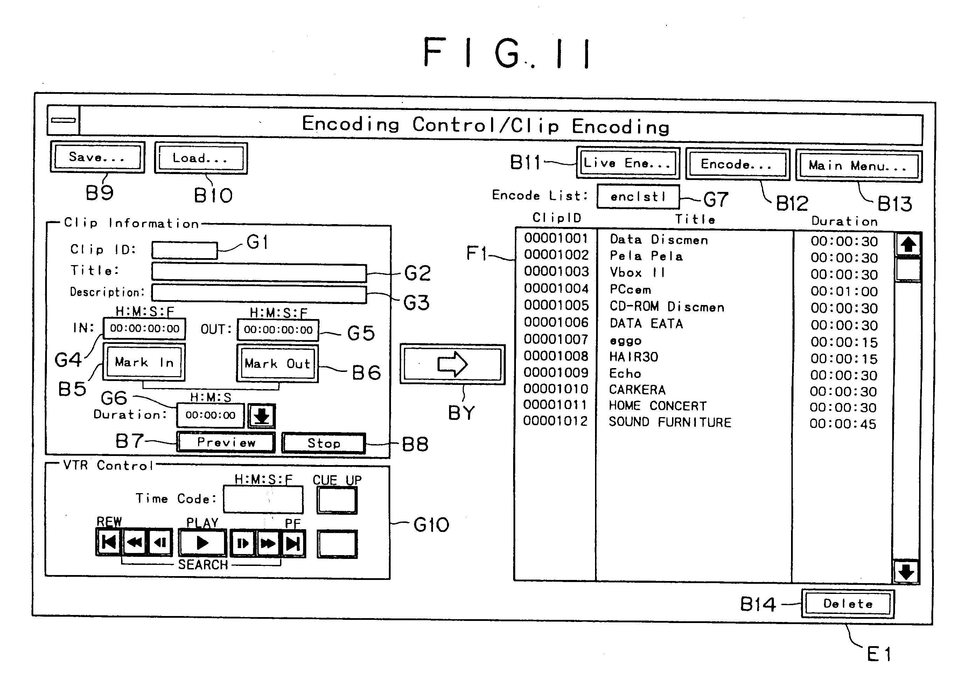

If the operator selects an encode mode by manipulating the mouse 62A and clicking the select button B1 according to the menu image M1 displayed on the monitor 56A, the clip encoding work image El shown in Fig. 11 is displayed on the monitor 56A. The clip encoding work image E1 includes a work area G1 for inputting clip ID which represents the identification number specific to the clip, a work area G2 for inputting "Title" of the clip name, a work area G3 of "Description" relative to the clip, a work area G4 for inputting the clip start time, and a work area G5 for inputting the clip end time.

The clip information set in this clip encoding work image El is stored in an encode list file as attributes of the clip.

The work image El includes a work area G7 for inputting an encode list where a program to be encoded is registered, and a display area F1 for collectively displaying, in vertical columns, the clip ID, titles and broadcast durations of the encoded clips calculated by the computer 24 from the start time and end time of each clip.

The work image El further includes a button B5 "Mark IN" and a button B6 "Mark OUT" for setting a start time and an end time based on the time code of each clip encoded according to the editing MPEG2 standard, a work area G10 for reproducing the video data by the VTR 19, and an arrow button BY for inserting each clip, which is set in the work areas G1 - G10, into a click position in the display area F1. Here, the operator reproduces the video data by the VTR 19 and sets the clip start time by clicking the button B5 through manipulation of the mouse 62A while confirming, in the work area G4, the time code start time of the desired clip, or sets the -time code end time of the desired clip by clicking the button B6 while watching the work area G5.

The work image El further includes a button B7 "Preview" for setting a preview mode to transmit the decoded clip from the output channel, and a button B8 "Stop" for stopping the video-audio output of the previewed clip.

Besides the above, the work image El further includes a button B9 "Save" for saving the encode list of the encoded clips in the hardware 57A, a button B10 "Load "for loading the desired encode list on the RAM 53, a button B14 "Delete" for deleting the clips in the loaded encoded list on the RAM 53A, and select buttons B11, B12 and B13 for selecting the live encode work image E4, the encode work image E2 and the main menu image M1, respectively.

The encode work image E2 includes a display area F2 for collectively displaying the clip ID and titles, clip start time and end time, and broadcast durations which are attribute information of the clips to be encoded in the encode list set on the work image El, a work area Gll "Device" for setting and displaying the name of a recording device, work areas G12 and G13 for inputting the start ID and end ID of the clip to be encoded, a display area F3 "Total Remaining" for displaying, when the recording device is the library unit 22, the total remaining recording time of the hard disk in the library unit 22, and a display area F4 "Remaining" for displaying the remaining recording time of the recording device. In case the recording device is the library unit 22, the remaining recording time of the hard disk connected to the encoder 21 is displayed in the display area F4.

The encoding can be started by manipulating the mouse to click a button B17 "Start" after confirmation of the remaining recording time. And when necessary, the encoding can be interrupted by manipulating the mouse to click a button B18 "Stop".

In the encode list table work image E3, the titles in the encode list are displayed collectively in vertical columns within the work area G15. Further in the encode list table work image E3, there are included an open button B20 "Open" for developing, on the encode work image E2, the contents of the encode list clicked in the work area G15, a delete button B21 "Delete" for deleting the encode list specified by click in the work area G15, and a cancel button B22 "Cancel" for terminating the display of the encode list table work image E3.

The operator is enabled to select one or more desired encode lists by click and drag after positioning a cursor on the desired encode list within the work area G15 on the work image E3.

The encode list table work image E3 can be displayed through direct access thereto from the encode work image E2 or the clip encoding work image E1.

The library encode work image E4 includes a button B26 for starting the encode when monitoring the clip being encoded, a button B27 for stopping the encode, a work area G23 for displaying clip information relative to the clip being currently encoded, such as storage device, remaining recording time, clip ID, title and description, and work areas G20 and G22 for displaying information (input terminal and output terminal) of the video source to be reproduced according to the work area G22.

### (3-2) Selection of recording device and display of remaining recording time

Under encode control in the encode processing section 15, selection of a recording device and display of the remaining recording time are executed in conformity with the encoding control program. More specifically, the CPU operation according to the encoding control program starts at step SP1 where a desired clip item in the encode list displayed on the work image El is indicated, clicked and dragged by manipulating the mouse 62A, so that the desired clip to be encoded is selected, and then the work image E2 for collectively displaying the contents of the encode list is displayed on the screen.

Subsequently the CPU operation proceeds to step SP2, where the work area G11 is clicked by manipulating the mouse 62A, and further the display window is extended with click and drag of the arrow to thereby select a desired recording device out of a plurality of clip recording devices displayed in the window which is commonly termed a combo box.

In the combo box, there are displayed the library unit 22 and the streamer 23 incorporated in the encode processing section 15 and also the recording devices of the media units 26A - 26F in the play-out section 16. And one device for recording the desired clip is indicated, clicked and selected by manipulating the mouse 62A.

Thereafter the CPU operation proceeds to step SP3 to make a decision as to whether the selected recording device is the media unit 26 in the play-out section 16. If the result of this decision signifies that the selected recording device is the media unit 26, the CPU operation proceeds to step SP4 to inquire the remaining recording time of the media unit 26 through the play-out control program. Then the control is shifted to the play-out control program, and the program of steps SP10 - SP14 is executed.

In the play-out control program, first a decision is made at step SP10 as to whether the plurality of media units 26A - 26F are connected to the video server 21 or not. And if the result of this decision signifies that only one media unit is connected to the video server 21, the CPU operation skips step SPll and proceeds to step SP12. Meanwhile, in case the plurality of media units are connected to the video server 21, the CPU operation proceeds to step SPll to detect the number of the connected media units.

Subsequently at step SP12, the CPU calculates the remaining recording time with regard to the media units 26 connected to the video server 21 as confirmed at steps SP10 and/or SP11.

Then the CPU operation proceeds to step SP13, where a summary is formed by summing up the remaining recording time of each of the connected media units 26.

And thereafter at step SP14, the remaining recording time of the media units summarized at step SP13 is sent to the encoding control program, and the CPU operation performed according to the play-out control program is shifted to the operation based on the encoding control program.

Next the CPU operation proceeds to step SP15, where the remaining recording time summarized at step SP13 is displayed in the area F3 "Total Remaining" on the work image E2. Subsequently the CPU operation proceeds to step SP7, where the remaining recording time of the selected recording device (in this case, one of the media units 26A - 26F) is displayed in the display area F4 "Remaining" on the work image E2.

Further the CPU operation proceeds to step SP8, where the kind of the selected recording device (in this case, one of the media units 26A - 26F) is displayed in the area G11 "Device" on the work image E3, and the routine for selection of the recording device and display of the remaining recording time is terminated.

When the result of the decision at step SP3 signifies that the selected recording device is not any media unit 26, the CPU operation proceeds to step SP5 to make another decision as to whether the selected recording device is "Test" or not. And if the result of this decision signifies that the selected recording device is any other than "Test", the CPU operation proceeds to step SP6 where the remaining recording time of the selected recording device is calculated, and then at step SP7, the remaining recording time of the selected recording device is displayed in the display area F4 "Remaining" on the work image E3.

Thereafter the CPU operation proceeds to step SP8, where the kind of the selected recording device is displayed in the area G11 "Device" on the work image E3, and the routine for selection of the recording device and display of the remaining recording time is terminated.

In case the result of the decision at step SP5 signifies that the selected recording device is not any other than "Test", the CPU operation proceeds to step SP8 where the kind of the selected recording device is displayed in the area G11 "Device" on the work image E3, and the routine for selection of the recording device and display of the remaining recording time is terminated.

In the structure of the encode processing section 15 mentioned above, when the video-audio data reproduced by the VTR 19 are encoded in conformity with the MPEG2 standard and then are stored in the recording device, first the encode work image El is selected on the menu image M1 according to the routine for selection of the recording device and display of the remaining recording time based on the encoding control program, and then a desired clip to be encoded is selected at step SPl on the work image E1 by manipulating the keyboard 60A or the mouse 62A.

Next at step SP2, a recording device for storing the encode data is selected on the work image E2. If the selected recording device is any media unit 26, the processes at steps SP4, SP10 - SP15 are executed to calculate the information representing the remaining recording time of the media unit 26 through the play-out control software, and the remaining recording time thus calculated is sent to the encoding control software. And then the remaining recording time is displayed in the area F3 "Total Remaining" and the area F4 "Remaining".

In case the selected recording device for storing the encode data is the library unit 22 or the streamer 23, the remaining recording time thereof is calculated similarly to the above, and then the remaining recording time of the selected recording device is displayed in the area F4 "Remaining". And further the recording device is also displayed in the work area G11 "Device".

In this manner, the operator can refer, on the work image E2, to the broadcast duration of the clip reproduced by the VTR 19, and also to the respective remaining recording times of recording devices which are the library unit 22 and the streamer 23 in the encode processing section 15 and the media units 26 in the play-out section 16. Consequently, when the remaining recording capacities of the library unit 22 and the streamer 23 of the encode processing section 15 are small on the basis of the respective remaining recording times of the recording devices, the media unit 26 of the play-out section 16 can be selected as a recording device. To the contrary, when the remaining recording capacity of the media unit 26 is small, the library unit 22 or the streamer 23 can be set as a recording device with facility.

Thus, in case a plurality of recording devices are provided to store encode data, a desired device for storing the encode data can be set efficiently.

According to the structure described, when the clip encoded in the encode processing section 15 is once stored in a predetermined recording device before being edited in the play-out section 16, there are detected the remaining recording capacities of the library unit 22 and the streamer 23 used as recording devices in the encode processing section 15, and also the remaining recording capacities of the media units 26 as recording devices in the play-out section 16, and such detected remaining recording capacities are displayed on the work image E2, whereby the operator is enabled to easily decide an adequate clip recording device on the basis of the displayed remaining recording capacity of each recording device.

### (4) Other embodiments

In the embodiment mentioned above, a remaining recording capacity is displayed by time. However, such capacity may be displayed by the number of bytes or by an image of GUI.

The above embodiment represents an exemplary case of encoding video data in conformity with the MPEG2 standard. But it is to be understood that the present invention is not limited to such embodiment alone, and the video data encoding system may be based on, for example, the MPEG1 standard as well. The essential point resides in that any encoding method can be adopted if time information inclusive of time code can be additionally attached to the encoded data, and similar effects are achievable as in the above embodiment.

Further, the above embodiment represents an exemplary case of calculating each clip broadcast duration on the basis of the time code attached additionally to the encoded data, but the present invention is not limited thereto alone, and the operator may calculate each clip broadcast duration on the basis of the time required for actual reproduction when encoding the data in the encode processing section 15.

## Claims

1. A video-audio data processor for processing video-audio data and saving the same, comprising:
a means for reproducing the video-audio data;
a processing means for processing the video-audio data reproduced by said reproducing means;
a register means for registering the video-audio data to be processed by said processing means;
a plurality of selectable recording means;
a selecting means for selecting desired one of said plurality of selectable recording means to save the processed video-audio data therein;
a display means for displaying the remaining recording capacity of the selected recording means; and
a control means for controlling the operation in such a manner that the video-audio data registered in said register means to be processed are reproduced by said reproducing means, then the reproduced video-audio data are processed by said processing means, and the processed video-audio data are saved in the recording means selected by said selecting means.

2. The video-audio data processor according to claim 1, further comprising a computer to which a monitor is connected, wherein each of said register means, selecting means and display means consists of a graphical user interface operated on said computer.

3. The video-audio data processor according to claim 2, wherein the operation of said reproducing means is so controlled that said register means sets a start point and an end point of the video-audio data to be processed.

4. The video-audio data processor according to claim 1, wherein said register means displays, in the form of a list, a plurality of the video-audio data registered to be processed, and said list has an identification name so as to be specified.

5. The video-audio data processor according to claim 4, wherein said register means is capable of selecting one or more lists by selecting the names of the plural lists.

6. The video-audio data processor according to claim 1, wherein tape streamers are provided as said plurality of selectable recording means.

7. The video-audio data processor according to claim 1, wherein hard disks are provided as said plurality of selectable recording means.

8. The video-audio data processor according to claim 1, wherein said processing means consists of a video-audio data encoder, and said register means further has a means to control the operation of reproducing the encoded video-audio data.

9. The video-audio data processor according to claim 1, wherein at least one of said selectable recording means is connected to a video-audio data server, and said server transmits the encoded video-audio data in accordance with a transmitting program list.

10. A method of processing and saving input video-audio data, comprising the steps of:
registering the video-audio data to be processed;
selecting, out of a plurality of selectable recording means, one recording means for saving the processed video-audio data therein;
displaying the remaining recording capacity of the selected recording means;
reproducing the registered video-audio data to be processed;
processing the reproduced video-audio data; and
saving the processed video-audio data in said selected recording means.
